# EUROPÄISCHE PATENTSCHRIFT

(11) **EP 0 729 874 B1**
(45) Veröffentlichungstag und Bekanntmachung des Hinweises auf die Patenterteilung: **29.04.1998**
(21) Anmeldenummer: 95102951.1
(22) Anmeldetag: 02.03.1995
(51) Int. Cl.: B62D 5/083

(54) **Lenkventil**
Steering valve
Clapet de direction

(43) Veröffentlichungstag der Anmeldung: 04.09.1996
(73) Patentinhaber: TRW Fahrwerksysteme GmbH & Co. KG, 40547 Düsseldorf (DE)
(72) Erfinder: Eberhart, Eugen Dipl.-Ing., D-40223 Düsseldorf (DE)
(74) Vertreter: Stenger, Watzke & Ring Patentanwälte

(56) Entgegenhaltungen:
- WO-A-87/02318
- DE-A- 3 634 215
- DE-A- 3 934 468
- US-A- 4 819 545

## Beschreibung

Die Erfindung betrifft ein Lenkventil zur Versorgung eines Stellgliedes mit Hydraulikdruck, bestehend aus einer Eingangswelle, einer Ausgangswelle, einem Torsionsstab, der mit einem Ende mit der Eingangswelle und dem anderen Ende mit der Ausgangswelle verbunden ist, einer die Eingangswelle umgebenden Ventilhülse und einem Reaktionskolben, der relativ zur Eingangswelle axial beweglich, aber drehfest angeordnet und über eine elastische Drehmitnahme mit der Ventilhülse verbunden ist.

Lenkventile der vorstehend beschriebenen Gattung sind beispielsweise aus der US-PS 48 19 545 bekannt. Eine mit einer Lenkstange verbundene Eingangswelle ist über einen Torsionsstab mit einer mit einem Ritzel versehenen Ausgangswelle verbunden. Das Ritzel wirkt auf die Zahnstange einer Lenkung. Für derartige Lenksysteme ist die Verwendung von Lenkventilen bekannt. Dazu ist in bekannter Weise eine Ventilhülse vorgesehen, welche mit der Ausgangswelle in Eingriff steht und die Eingangswelle umgibt. Von einer Pumpe wird Hydraulikflüssigkeit unter Druck durch das System gepumpt. Bei einer relativen Verdrehung der Eingangswelle zur Ventilhülse wird Hydraulikdruck einem Hydraulikmotor zugeführt, welcher die Zahnstangenbewegung in eine der beiden möglichen Richtungen unterstützt. Ein mit einer Druckfeder beaufschlagter Reaktionskolben wird geschwindigkeitsabhängig mit Hydraulikdruck beaufschlagt, wodurch das zu überwindende Drehmoment zur Verdrehung der Eingangswelle relativ zur Ventilhülse geschwindigkeitsabhängig variiert wird. Derartige vorbekannte Reaktionskolben sind drehfest gegenüber der Eingangswelle mittels Kugeln fixiert, die in auf der Eingangswelle angeordneten Längsnuten geführt werden. Weiterhin ist der Reaktionskolben durch eine Druckfeder in Richtung Ventilhülse vorgespannt. An der zum Reaktionskolben weisenden Stirnfläche der Ventilhülse ist ein sogenannter Erweiterungskolben angeordnet, der zusammen mit der gegenüberliegenden Stirnflache des Reaktionskolbens eine elastische Drehmitnahme bildet. Zu diesem Zweck sind an den sich gegenüberliegenden Stirnflächen des Erweiterungskolbens und des Reaktionskolbens V-förmige Nuten angeordnet, in welche Kugeln eingesetzt sind. Wird auf die Eingangswelle ein Drehmoment aufgebracht, wird dieses über den Reaktionskolben und die elastische Drehmitnahme auf die Ventilhülse übertragen. Durch die in den V-förmigen Nuten angeordneten Kugeln der elastischen Drehmitnahme, Kugelkupplung genannt, wird das Drehmoment in eine axiale Kraft umgesetzt, welche gegen die Federkraft der den Reaktionskolben beaufschlagenden Feder wirkt. Sobald diese von der Kugelkupplung erzeugte Axialkraft die gegenwirkende Federkraft übersteigt, wird der Reaktionskolben von der Ventilhülse axial wegbewegt und eine relative Verdrehung zwischen Eingangswelle und Ventilhülse ermöglicht. Eine Variation des Drehmomentes kann dadurch erzeugt werden, daß ein einstellbarer Hydraulikdruck auf die der Feder gegenüberliegende Seite des Reaktionskolbens gebracht wird. Derartige Servolenkventile werden Parameterventil genannt.

Ein Nachteil herkömmlicher Parameterventile besteht in der unzulänglichen Kopplung zwischen Eingangswelle und Reaktionskolben. Zum einen muß die Eingangswelle mit Längsnuten versehen werden, was eine mechanische Schwächung und einen großen Herstellungsaufwand bedeutet. Die eine Axialbewegung des Reaktionskolbens gegenüber der Eingangswelle erlaubende, eine relative Verdrehung des Reaktionskolbens gegenüber der Eingangswelle jedoch verhindernde Nuten-/Kugelanordnung ist praktisch nicht ohne Spiel herstellbar. Dieses Spiel wird von der Bedienperson auch als Lenkradspiel wahrgenommen und als nachteilig angesehen. Diese Anordnung unterliegt darüber hinaus erheblichen Reibungskräften, so daß das Spiel mit der Zeit auch vergrößert wird. Bei starker Bewegung des Ventils, beispielsweise bei schlechter Fahrbahn, neigen die vorgenannten Parameterventile aufgrund dieser Nuten-/Kugelanordnung zu unangenehmen und verunsichernden Klappergeräuschen. Schließlich ist es notwendig, wegen der in der Eingangswelle angeordneten Längsnuten den reaktionskolbenseitigen Lenkventilbereich hydraulisch abzudichten. Derartige Abdichtungen werden "Upper Seal" genannt und stellen mit zunehmender Standzeit ein Ausfallrisiko des Lenkventils dar.

Da die den Reaktionskolben beaufschlagende Spiralfeder gegen die Eingangswelle an einem Sicherungsring abgestützt wird, hängt die sich ergebende Reaktionskolbenvorspannung von der Qualität der Ventilvormontage ab. Es entsteht eine unerwünschte Streubreite der einzustellenden Federvorspannung. Wegen der Verwendung der Spiralfeder ist darüber hinaus die Federkraft gegen die Reaktionskolben nicht konzentrisch. Es ergeben sich somit Verschränkungen des Ventils, die sich in Form von Reibung gegen die Eingangswelle bis hin zu Hysteresisproblemen auswirken.

Am Ende der Montage eines herkömmlichen Parameterventils wird dieses dadurch balanciert, das heißt die Teile relativ zueinander endgültig positioniert, daß im letzten Arbeitsschritt der Verlängerungskolben relativ zum Ventilhülsenende beispielsweise durch Verpressen fixiert wird. Selbst geringe Fehler bei diesem Vorgehen führen zu Balancierungsfehlern, die zu einer Lenkventilfehlfunktion führen können.

Ein besonderes Problem herkömmlicher Parameterventile ergibt sich dadurch, daß die Kugelnuten in den Erweiterungskolben und Reaktionskolben aus Gründen der wirtschaftlichen Bearbeitung regelmäßig paarweise beispielsweise durch Einsägen hergestellt wurden. Durch die paarweise Anordnung werden beispielsweise Kugelkupplungen mit vier Kugeln verwendet, wodurch eine ungünstige Lastaufteilung bewirkt wird.

Insgesamt sind herkömmliche Parameterventile mit einem hohen Fertigungs-und Bauteilaufwand verbunden.

Davon ausgehend liegt der Erfindung die **Aufgabe** zugrunde, ein Lenkventil der gattungsgemäßen Art dahingehend zu verbessern, daß die oben genannten Nachteile vermieden werden und das Lenkventil wirtschaftlicher herstell- und montierbar, praktisch wartungsfrei und störungsunanfällig ist.

Zur technischen **Lösung** dieser Aufgabe wird das gattungsgemäße Lenkventil dadurch verbessert, daß in dem Lenkventil ein torsionssteifes, in Axialrichtung elastisches Element angeordnet ist, welches mit einem Ende an der Eingangswelle und mit seinem anderen Ende an dem Reaktionskolben befestigt ist.

Durch die Verwendung eines torsionssteifen, axialelastischen Elementes ist es nicht mehr erforderlich, mittels einer Nuten-/Kugelanordnung den Reaktionskolben axialverschieblich, aber drehfest relativ zur Eingangswelle anzuordnen. Dadurch fallen die Nachteile im Zusammenhang mit dem Spiel, die Reibung sowie die Klappergeräusche und dergleichen weg. Da die gesamte Nuten-/Kugelanordnung entfällt, werden weder der Bearbeitungsvorgang hinsichtlich der Eingangswelle und die damit verbundene Materialschwächung noch die Kugelbauteilgruppe benötigt, wodurch das erfindungsgemäße Ventil erheblich wirtschaftlicher wird. Durch die direkte Befestigung des torsionssteifen, axialelastischen Elementes an der Eingangswelle und an dem Reaktionskolben wird das Kupplungselement völlig spiel- und reibungsfrei. Die direkte Befestigung bewirkt auch, daß die Federkraft durch axiale Verschiebung des elastischen Elementes bei der Endmontage exakt festgelegt werden kann. Darüber hinaus ist bei diesem Vorgang auch eine exakte Balancierung möglich, ohne daß radial zueinander beweglich Bauteile gegeneinander verpreßt werden müssen.

In vorteilhafter Weise ist das elastische Element ein blatt- bzw. plattenförmiges Federelement. Alternativ kann auch eine torsionssteife Spiralfeder verwendet werden. In besonders vorteilhafter Weise wird als elastisches Element ein Metallfaltenbalg vorgeschlagen. Dieser ist ein kostengünstiges Bauteil, welches leicht am Reaktionskolben und an der Eingangswelle befestigt werden kann, absolut torsionssteif und damit spielfrei ist und darüber hinaus eine Upper Seal verzichtbar macht.

Gemäß einem vorteilhaften Vorschlag der Erfindung ist das elastische Element an der Eingangswelle und/oder an dem Reaktionskolben angeschweißt. Gemäß einem Vorteil der Erfindung kann zwischen elastischem Element und der Eingangswelle ein Lagerring befestigt sein.

In vorteilhafter Weise umfaßt die Kugelkupplung zwischen Reaktionskolben und Ventilhülse gesinterte Kupplungsringe. Die Herstellung der Kupplungsringe als Sinterbauteile ermöglicht die Herstellung von Kupplungsringen mit jeweils drei Kugelaufnahmevertiefungen, wodurch eine verbesserte axiale Lastaufteilung ermöglicht wird. Da die drei Kugeln immer im Eingriff sind, wird die Klapperneigung dieser Kugeln verringert. Es können darüber hinaus durch den Sintervorgang auch größere Kugelaufnahmevertiefungen vorgesehen werden, so daß vergrößerte Kugeln verwendet werden können und sogar die Verwendung eines Kugelkäfigs ermöglichen.

Das erfindungsgemäße Lenkventil ist wegen erheblich verringerter Bearbeitungsmaßnahmen und einem erheblich verringerten Bauteileaufwand gegenüber herkömmlichen Parameterventilen sehr wirtschaftlich herstellbar. Darüber hinaus ist es einfacher zu montieren und zu balancieren, wobei gleichzeitig eine exakte Einstellbarkeit ermöglicht ist. Alle funktionalen Nachteile sind mit einfachsten Mitteln behoben. Herkömmliche Produktionslinien müssen nicht übermäßig verändert werden, da sich die Raumbedarfbedingungen am Ventil praktisch nicht verändern.

Weitere Vorteile und Merkmale ergeben sich aus der folgenden Beschreibung anhand der Figuren. Dabei zeigen:
- Figur 1: eine teilgeschnittene schematische Darstellung eines aus dem Stand der Technik bekannten Lenkventils und
- Figur 2: eine teilgeschnittene schematische Darstellung eines Ausführungsbeispiels für ein erfindungsgemäßes Lenkventil.

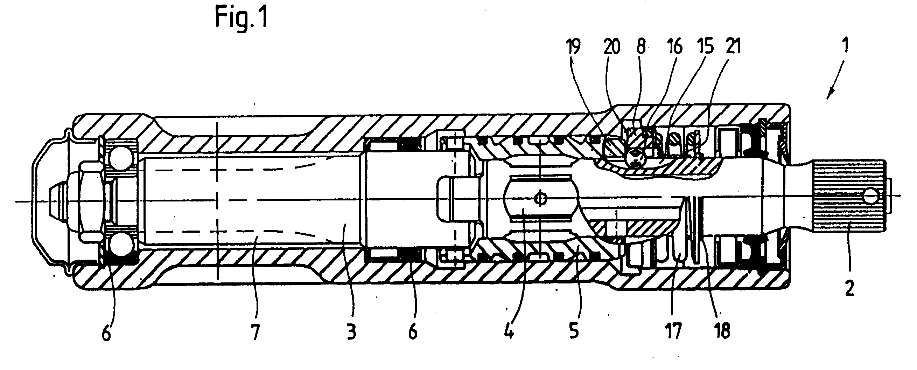

Nur zu Erläuterungszwecken soll das in Figur 1 gezeigte, aus dem Stand der Technik bekannte Lenkventil beschrieben werden. In den beiden Figuren sind gleiche Bauteile mit gleichen Bezugszeichen versehen.

Das aus dem Stand bekannte Lenkventil 1 umfaßt eine Eingangswelle 2, eine Ausgangswelle 3 sowie einen Torsionsstab 4, welcher mit seinen beiden Enden mit jeweils einer der beiden Wellen verbunden ist. Eine Ventilhülse 5 umgibt die Eingangswelle 2. Die beschriebene Anordnung ist mittels Lagern 6 in einem Gehäuse angeordnet. Die Ausgangswelle 3 umfaßt ein Ritzel 7, welches mit einer nicht gezeigten Lenkstange einer Lenkung in Verbindung steht. Oberhalb der Ventilhülse 5 ist ein Reaktionskolben 8 angeordnet, welcher gegenüber der Eingangswelle 2 axial beweglich aber verdrehfest angeordnet ist. Zu diesem Zwecke weist die Eingangswelle 2 Längsnuten 15 auf, in welchen Kugeln 16 angeordnet sind. In entsprechenden Ausnahmen an der Ringinnenfläche des Reaktionskolbens sind diese Kugeln gegengelagert. Der Reaktionskolben 8 kann also relativ zur Eingangswelle 2 nicht verdreht werden, wohl aber im Rahmen der Kugelbeweglichkeit innerhalb der Längsnut 15 axial verschoben werden. Der Reaktionskolben 8 ist mittels einer Spiralfeder 17 gegen die Ventilhülse 5 vorgespannt, wobei die Spiralfeder 17 an ihrem dem Reaktionskolben 8 entgegengesetzten Ende mittels eines Sicherungsringes 18 an der Eingangswelle axial fixiert ist. Zwischen dem Reaktionskolben 8 und der Ventilhülse 5 ist eine elastische Drehmitnahme in Form einer Kugelkupplung angeordnet. Zu diesem Zwecke ist an der Ventilhülse 5 ein Erweiterungskolben 19 angeordnet, welcher an seiner dem Reaktionskolben zugewandten Stirnfläche Kugelaufnahmevertiefungen aufweist, die mit Kugelaufnahmevertiefungen in der gegenüberliegenden Stirnfläche des Reaktionskolbens 8 zur Aufnahme von Kugeln zusammenwirken. Da der über dem Reaktionskolben 8 liegende Raum mit Hydraulikdruck beaufschlagt wird, ist eine Abdichtung dieses Druckraumes durch die sogenannte Upper Seal 21 erforderlich. Wird auf die Eingangswelle 2 ein Drehmoment aufgebracht, so wird dieses über den durch Federkraft und Hydraulikdruck beaufschlagten Reaktionskolben 8 und die Kugelkupplung auf die Ventilhülse übertragen. Gleichzeitig wird durch die Kugelkupplung eine den Reaktionskolben gegen die Federkraft und den Hydraulikdruck bewegende Kraft ausgeübt, welche ab einem vorgegebenen Drehmoment größer wird als die beiden genannten Kräfte, so daß eine relative Verdrehung der Eingangswelle 2 zur Ventilhülse 5 durch die getrennte Kugelkupplung möglich wird. Das sich negativ auswirkende Spiel wird zum einen durch die in den Längsnuten 15 beweglichen Kugeln 16, zum anderen durch die in der zwischen Reaktionskolben 8 und Erweiterungkolben 19 gebildeten Kugelkupplung verwendeten Kugeln bewirkt. Die Eingangswelle wird durch die Längsnuten 15 und den Einstich zur Aufnahme des Sicherungsrings 18 mechanisch geschwächt.

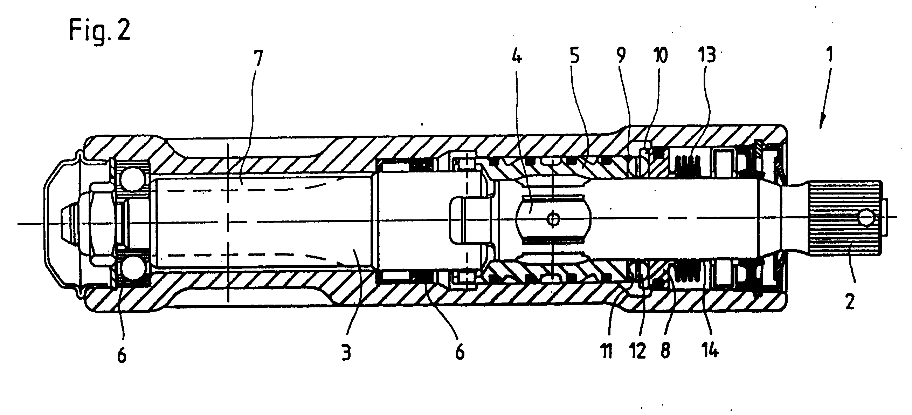

Der Prinzipaufbau des in Figur 2 gezeigten Ausführungsbeispiels für ein erfindungsgemäßes Lenkventil entspricht dem eben beschriebenen Aufbau. Das Lenkventil 1 umfaßt eine Eingangswelle 2, eine Ausgangswelle 3, die durch den Torsionsstab 4 miteinander verbunden sind, und die Ventilhülse 5, die die Eingangswelle 2 umgibt. Diese Bauteile sind mittels Lagern 6 in einem Gehäuse angeordnet. Das Ritzel 7 der Ausgangswelle 3 dient zum Antrieb einer nicht gezeigten zur Lenkung gehörigen Zahnstange. Der federkraft- und druckbeaufschlagte Reaktionskolben 8 wirkt über eine Kugelkupplung 9 mit der Ventilhülse 5 zusammen. An den Stirnflächen 10 des Reaktionskolbens und 11 der Ventilhülse sind Kugelaufnahmevertiefungen zur Aufnahme der Kugeln 12 angeordnet. Die Funktion der Kugelkupplung entspricht der eben beschriebenen Funktion. Der feder- und/oder druckbelastete Reaktionskolben 8 wird in Richtung Ventilhülse gedrückt, so daß die Kugeln in den Aufnahmevertiefungen fest einliegen. Bei Aufbringen eines Drehmomentes auf den Reaktionskolben bewegen sich die Kugeln in den im wesentlichen V-förmigen Aufnahmevertiefungen und drücken den Reaktionskolben gegen die auf ihn wirkenden Kräfte von der Ventilhülse weg, bis es zu einer entsprechenden Verdrehung der Eingangswelle relativ zur Ventilhülse kommt. Im gezeigten Ausführungsbeispiel ist der ventilhülsenseitige Kugelkupplungsring einstückig an der Stirnfläche der Ventilhülse 5 ausgebildet.

Ein als torsionssteifes, axialelastisches Element eingesetzter Metallfaltenbalg 13 ist an der Fixierstelle 14 an der Eingangswelle 2 befestigt. Mit seinem anderen Ende ist der Metallfaltenbalg 13 am Reaktionskolben 8 befestigt. Somit ist keine Upper Seal erforderlich. Darüber hinaus wird die Eingangswelle 2 weder durch Längsnuten noch durch eine Nut für einen Sicherungsring geschwächt. Die gezeigte Anordnung ist absolut spielfrei und insbesondere einstellbar. Nach dem Zusammenbau der Einzelteile kann die auf den Reaktionskolben 8 wirkende, und vom Metallfaltenbalg 13 aufgebrachte Federkraft durch Vorspannen des Metallfaltenbalgs exakt bestimmt werden. Anschließend wird der Metallfaltenbalg 13 an der Fixierstelle 14 an der Eingangswelle 2 befestigt. Eine Vielzahl von Bearbeitungs- und Montagevorgängen entfallen, ebenso wie eine Vielzahl von Bauteilen. **Bezugszeichenliste:**
- 1: Lenkventil
- 2: Eingangswelle
- 3: Ausgangswelle
- 4: Torsionsstab
- 5: Ventilhülse
- 6: Lager
- 7: Ritzel
- 8: Reaktionskolben
- 9: Kugelkupplung
- 10: Stirnfläche
- 11: Stirnfläche
- 12: Kugel
- 13: Metallfaltenbalg
- 14: Fixierstelle
- 15: Längsnut
- 16: Kugel
- 17: Spiralfeder
- 18: Sicherungsring
- 19: Erweiterungskolben
- 20: Stirnfläche
- 21: Upper Seal

## Patentansprüche

1. Lenkventil zur Versorgung eines Stellgliedes mit Hydraulikdruck, bestehend aus einer Eingangswelle (2), einer Ausgangswelle (3), einem Torsionsstab (4), der mit einem Ende mit der Eingangswelle und dem anderen Ende mit der Ausgangswelle verbunden ist, einer die Eingangswelle (2) umgebenden Ventilhülse (5) und einem Reaktionskolben (8), der relativ zur Eingangswelle (2) axial beweglich, aber drehfest angeordnet und über eine elastische Drehmitnahme mit der Ventilhülse (5) verbunden ist,
**dadurch gekennzeichnet,**
daß in dem Lenkventil (1) ein torsionssteifes, in Axialrichtung elastisches Element (13) angeordnet ist, welches mit einem Ende an der Eingangswelle (2) und mit seinem anderen Ende am Reaktionskolben (8) befestigt ist.

2. Lenkventil nach Anspruch 1, dadurch gekennzeichnet, daß das elastische Element ein blatt- bzw. plattenförmiges Federelement ist.

3. Lenkventil nach Anspruch 1, dadurch gekennzeichnet, daß das elastische Element eine torsionssteife Spiralfeder ist.

4. Lenkventil nach Anspruch 1, dadurch gekennzeichnet, daß das elastische Element ein Metallfaltenbalg (13) ist.

5. Lenkventil nach einem der vorhergehenden Ansprüche, dadurch gekennzeichnet, daß das elastische Element (13) an der Eingangswelle (2) und/oder dem Reaktionskolben (8) angeschweißt ist.

6. Lenkventil nach einem der Ansprüche 1 bis 4, dadurch gekennzeichnet, daß das elastische Element an der Eingangswelle (2) mittels eines Lagerringes befestigt ist.

7. Lenkventil nach einem der vorhergehenden Ansprüche, dadurch gekennzeichnet, daß die elastische Drehmitnahme eine Kugelkupplung (9) ist.

8. Lenkventil nach Anspruch 7, dadurch gekennzeichnet, daß die Kugelkupplung (9) gesinterte Kupplungsringe umfaßt.

9. Lenkventil nach Anspruch 8, dadurch gekennzeichnet, daß die Kupplungsringe drei Kugelaufnahmevertiefungen aufweisen, die in gleichen Winkelabständen zueinander auf der Kupplungsringstirnfläche angeordnet sind.

10. Lenkventil nach einem der Ansprüche 7 bis 9, dadurch gekennzeichnet, daß der Kupplungsring einstückig mit der Ventilhülse 5 an deren Stirnfläche ausgebildet ist.

## Claims

1. Steering valve for supplying a positioning member with hydraulic pressure, the said valve consisting of an input shaft (2), an output shaft (3), a torsion bar (4) which is connected by one end to the input shaft and by the other end to the output shaft, a valve sleeve (5) surrounding the input shaft (2) and a reaction piston (8) which is disposed so as to be rotation-proof but axially movable relative to the input shaft (2) and is connected to the valve sleeve (5) via an elastic rotational entrainment means,
characterised in that
there is disposed in the steering valve (1) a torsionally stiff element (13) which is elastic in the axial direction and is attached by one end to the input shaft (2) and by its other end to the reaction piston (8).

2. Steering valve according to claim 1, characterised in that the elastic element is a leaf-shaped or plate-shaped spring element.

3. Steering valve according to claim 1, characterised in that the elastic element is a torsionally stiff spiral spring.

4. Steering valve according to claim 1, characterised in that the elastic element is a metal bellows (13).

5. Steering valve according to one of the preceding claims, characterised in that the elastic element (13) is welded onto the input shaft (2) and/or the reaction piston (8).

6. Steering valve according to one of claims 1 to 4, characterised in that the elastic element is attached to the input shaft (2) by means of a ring bearing.

7. Steering valve according to one of the preceding claims, characterised in that the elastic rotational entrainment means is a ball coupling (9).

8. Steering valve according to claim 7, characterised in that the ball coupling (9) comprises sintered coupling rings.

9. Steering valve according to claim 8, characterised in that the coupling rings have three ball-receiving depressions which are disposed on the end face of the coupling ring at equal angular intervals from one another.

10. Steering valve according to one of claims 7 to 9, characterised in that the coupling ring is constructed in one piece with the valve sleeve (5) on the end face of the said valve sleeve.

## Revendications

1. Vanne de direction pour alimenter un organe de réglage avec une pression hydraulique, se composant d'un axe d'entrée (2), d'un axe de sortie (3), d'une barre de torsion (4), qui est reliée à une extrémité à l'axe d'entrée et à l'autre extrémité à l'axe de sortie, d'un manchon de vanne (5) entourant l'axe d'entrée (2) et d'un piston à réaction (8), qui est disposé de façon mobile axialement par rapport à l'axe d'entrée (2), mais est solidaire en rotation et est relié au moyen d'un dispositif élastique d'entraînement en rotation au manchon de la vanne (5), caractérisé en ce que l'on dispose dans la vanne de direction (1) un élément (13) rigide à la torsion, élastique dans le sens axial, qui est fixé à une extrémité à l'axe d'entrée (2) et à son autre extrémité au piston à réaction (8).

2. Vanne de direction selon la revendication 1, caractérisée en ce que l'élément élastique est un élément à ressort en forme de lame ou de disque.

3. Vanne de direction selon la revendication 1, caractérisé en ce que l'élément élastique est un ressort spiral rigide à la torsion.

4. Vanne de direction selon la revendication 1, caractérisé en ce que l'élément élastique est un soufflet métallique.

5. Vanne selon l'une des revendications précédentes, caractérisé en ce que l'élément élastique (13) est soudé à l'axe d'entrée (2) et/ou au piston à réaction (8).

6. Vanne de direction selon l'une des revendications 1 à 4, caractérisé en ce que l'élément élastique est fixé à l'axe d'entrée (2) au moyen d'une bague de support.

7. Vanne de direction selon l'une des revendications précédentes, caractérisée en ce que l'organe élastique d'entraînement en rotation est une attache à bille (9).

8. Vanne de direction selon la revendication 7, caractérisée en ce que l'attache à bille (9) comprend des bagues d'accouplement frittées.

9. Vanne de direction selon la revendication 8, caractérisée en ce que les bagues d'accouplement présentent trois creusures d'entraînement pour bille, qui sont disposées sur la face frontale des bagues d'accouplement à la même distance angulaire les unes par rapport aux autres.

10. Vanne de direction selon l'une des revendications 7 à 9, caractérisée en ce que la bague d'accouplement est constituée d'une seule pièce avec le manchon de vanne 5 sur sa face frontale.
